# EUROPÄISCHE PATENTSCHRIFT

(11) **EP 3 861 256 B1**
(45) Veröffentlichungstag und Bekanntmachung des Hinweises auf die Patenterteilung: **05.07.2023**
(21) Anmeldenummer: 19802171.9
(22) Anmeldetag: 12.11.2019
(51) Int. Cl.: F23N 1/00

(54) **VERFAHREN UND VORRICHTUNG ZUR REGELUNG EINES PROZESSES INNERHALB EINES SYSTEMS, INSBESONDERE EINES VERBRENNUNGSPROZESSES INNERHALB EINES KRAFTWERKS**
A METHOD AND DEVICE FOR REGULATING A PROCESS WITHIN A SYSTEM, IN PARTICULAR A COMBUSTION PROCESS IN A POWER STATION
PROCÉDÉ ET DISPOSITIF DE RÉGULATION D'UN PROCESSUS À L'INTÉRIEUR D'UN SYSTÈME, EN PARTICULIER D'UN PROCESSUS DE COMBUSTION À L'INTÉRIEUR D'UNE CENTRALE ÉLECTRIQUE

(30) Priorität: 20.11.2018 IT 201800010468
(43) Veröffentlichungstag der Anmeldung: 11.08.2021
(73) Patentinhaber: aixprocess GmbH, 52070 Aachen (DE)
(72) Erfinder: WENG, Martin, 52070 Aachen (DE)
(74) Vertreter: Hohendorf Kierdorf Patentanwälte PartGmbB
(86) Internationale Anmeldenummer: PCT/EP2019/081038
(87) Internationale Veröffentlichungsnummer: WO 2020/104255

(56) Entgegenhaltungen:
- WO-A1-02/077527
- WO-A1-2007/124981
- WO-A1-2010/121695
- DE-A1-102010 062 204

## Beschreibung

Die Erfindung betrifft ein Verfahren und eine Vorrichtung zur Regelung eines Prozesses innerhalb eines Systems, insbesondere eines Verbrennungsprozesses innerhalb eines Kraftwerks, wobei der zu regelnde Prozess eine Vorverarbeitung eines Rohstoffs, eine Verwertung des vorverarbeiteten Rohstoffs und eine Erfassung des Resultats der Verwertung des vorverarbeiteten Rohstoffs umfasst.

Die EP 1 364 163 B1 offenbart ein Verfahren und eine Vorrichtung zur Regelung eines Verbrennungsprozesses, bei dem in einem Kessel eines Kohlekraftwerkes oder eines Müllverbrennungsofens mittels Sensoren die Zustandsvariablen, welche den Zustand des Systems im Kessel beschreiben, gemessen und in einem mit den Sensoren verbundenen Rechner mit Optimierungszielen bezüglich der Schadstoffkonzentration verglichen werden und zur Regelung an den Rechner unter Bildung eines Regelkreises angeschlossene Stellvorrichtungen angesteuert werden, um geeignete Stellaktionen im System durchzuführen. Es wird ein von den Optimierungszielen unabhängiges Prozessmodell ermittelt, welches die Auswirkungen von Stellaktionen auf die Zustandsvariablen des Systems beim Schritt zu den Zustandsvariablen des nächsten Zeitpunkts unter Verwendung der Informationen über zeitlich zurückliegende Zustandsvariablen zur Integration in einen zeitlichen Kontext beschreibt und eine vom Prozessmodell unabhängige Situationsbewertung mittels Gütefunktionen, welche die Zustandsvariablen in Hinblick auf die Optimierungsziele bewertet.

Die EP 1 396 770 B1 offenbart ein Verfahren und eine Vorrichtung zur Regelung eines thermodynamischen Prozesses, bei dem Prozessgrößen im System gemessen, in einem neuronalen Netz anhand eines trainierten, aktuellen Prozessmodells Vorhersagen berechnet, mit Optimierungszielen verglichen und zur Regelung des Prozesses geeignete Aktionen im System durchgeführt werden, wobei zeitlich parallel zum normalen Regelungsbetrieb der Prozess automatisch analysiert, aus den ermittelten, modellrelevanten Prozessgrößen mehrere neue Prozessmodelle für neuronale Netze mit unterschiedlicher Topologie gebildet, die verschiedenen Typen von neuronalen Netzen trainiert und bezüglich der Vorhersagen mit dem aktuellen Prozessmodell verglichen werden und im Falle höherer Genauigkeit der Vorhersagen eines der neuen Prozessmodelle das aktuelle Prozessmodell durch das neue Prozessmodell ersetzt wird.

Die EP 1 850 069 B1 offenbart ein Verfahren und einen Regelkreis zur Regelung eines Verbrennungsprozesses in einer Anlage, insbesondere einem Kraftwerk, einer Müllverbrennungsanlage oder einem Zementwerk, in welcher Gut unter Zufuhr von Luft mittels des Verbrennungsprozesses unter Ausbildung wenigstens einen Flammenkörpers umgesetzt wird, wobei die den zustand des Systems in der Anlage beschreibenden Zustandsvariablen unter Verwendung wenigstens einer den Flammenkörper bildlich erfassenden Beobachtungsvorrichtung und weiterer Sensoren ermittelt und in einem Rechner bewertet werden, worauf gegebenenfalls geeignete Aktionen ausgewählt werden, um Stellvorrichtungen für wenigstens die Zufuhr von Gut und/oder Luft anzusteuern, wobei während einer Führungsregelung auf Soll-Werte der Zustandsvariablen und/oder auf eine Stabilität des Verbrennungsprozesses geregelt wird. Gemäß der EP 1 850 069 B1 wird zeitweilig von der Führungsregelung zu einer Störungsregelung gewechselt, gemäß welcher Aktionen ausgewählt werden, um Zustände des Systems in der Anlage anzufahren, bei denen die Zustandsvariablen innerhalb vorgegebener Grenzen gezielt vom optimalen Soll-Wert abweichen.

Die EP 1 890 207 B1 offenbart ein Verfahren und einen Regelkreis zum Erstellen eines Prozessmodells für die Regelung eines Verbrennungsprozesses in einer Anlage, insbesondere einem Kraftwerk, einer Müllverbrennungsanlage oder einem Zementwerk, in welcher Gut unter Zufuhr von Luft mittels des Verbrennungsprozesses unter Ausbildung wenigstens eines Flammenkörpers umgesetzt wird und der Zustand des Systems in der Anlage durch Zustandsvariablen beschrieben wird, wobei in einem ersten Schritt ein neuronales Netz angesetzt, in einem zweiten Schritt das neuronale Netz mit Messdaten der Zustandsvariablen, welche Messdaten von Eingangskanälen und Messdaten wenigstens eines Ausgangskanals umfassen, trainiert wird, und in einem dritten Schritt das neuronale Netz mit weiteren Messdaten der Eingangskanäle und Messdaten des Ausgangskanals getestet wird, indem durch das neuronale Netz der Ausgangskanal in seinem Zeitverlauf mit Werten prognostiziert wird, wobei aus den Abweichungen der prognostizierten Werte des Ausgangskanals von den Messdaten des Ausgangskanals eine prognostizierte Standardabweichung ermittelt wird. In einem vierten Schritt werden die Messdaten wenigstens eines Eingangskanals ersetzt durch eine Verteilung gemäß einer Verteilungskurve über einem Intervall von Quantilwerten als Anteile der Verteilung, die einem Flächenanteil unter der Verteilungskurve entsprechen. In einem fünften Schritt werden mit der Verteilung für jeden Quantilwert erneut Werte des Ausgangskanals berechnet und eine Standardabweichung der berechneten Werte des Ausgangskanals von den zugehörigen Messdaten ermittelt, wobei im Falle einer Vergrößerung der berechneten Standardabweichung gegenüber der prognostizierten Standardabweichung der Eingangskanal signifikant für das im ersten Schritt angesetzte und im zweiten Schritt trainierte neuronale Netz ist.

Die EP 1 906 092 B1 offenbart ein Verfahren und eine Anlage zur Regelung eines Verbrennungsprozesses in einer Anlage, insbesondere einem Kraftwerk, einer Müllverbrennungsanlage oder einem Zementwerk, in welcher Gut unter Zufuhr von Luft mittels des Verbrennungsprozesses umgesetzt wird und der Zustand des Systems in der Anlage durch Zustandsvariablen beschrieben und wenigstens mittels eines Regelkreises geregelt wird. Für wenigstens ein Paar korrelierter Zustandsvariablen werden Gruppen von Zuständen definiert, welche bezüglich Änderungen der korrelierten Zustandsvariablen vergleichbar sind, wobei jede Gruppe von vergleichbaren Zuständen hinsichtlich ihrer Übergangsfunktionen durch Parameter eines Standard-Reglers charakterisiert wird, und wobei die Parameter an Daten tatsächlicher Zustände angepasst werden, und wobei bei Änderungen des Zustandes des Systems in der Anlage die nächstkommende Gruppe von vergleichbaren Zuständen ausgewählt und ihre durch Parameter charakterisierten Übergangsfunktionen zur Regelung eingesetzt werden.

Die EP 1 967 792 B1 offenbart einen Regelkreis und ein Verfahren zur Regelung eines Verbrennungsprozesses in einer Anlage, insbesondere einem Kraftwerk, einer Müllverbrennungsanlage oder einem Zementwerk, mit einer Strecke zum Umsetzten von Gut unter Zufuhr von Luft mittels des Verbrennungsprozesses unter Ausbildung wenigstens eines Flammenkörpers, wenigstens einer den Flammenkörper bildlich erfassenden Beobachtungsvorrichtung und weiterer Sensoren zur Ermittlung von Eingangsdaten, wenigstens einer durch Ausgangsdaten ansteuerbaren Stellvorrichtung für wenigstens die Zufuhr von Gut und/oder Luft und einem Rechner zur Bewertung der Eingangsdaten in Bezug auf Zielwerte und zur Ermittlung der Ausgangsdaten unter Verwendung eines aktuellen Prozessmodells. Der Rechner weist ein Merkmalsextraktormodul auf, welches, insbesondere neben der normalen Regelung, für ein alternatives Prozessmodell mittels eines Informationsmaßes aus den Eingangsdaten Merkmale extrahiert, die für die Zielwerte informativ sind.

Die EP 2 048 553 B1 offenbart einen Regelkreis zur Regelung eines Prozesses, insbesondere eines Verbrennungsprozesses, in einer Anlage, insbesondere einem Kraftwerk, einer Müllanlage oder einem Zementwerkwerk, mit einer Strecke, wenigstens einer Messvorrichtung zum Erfassen von Observationswerten der Strecke, wenigstens einer von Aktionswerten ansteuerbaren, auf die Strecke einwirkenden Stellvorrichtung und einem Regler, an welchen die Messvorrichtung und die Stellvorrichtung angeschlossen sind und welcher die Observationswerte der Messvorrichtung auswertet, den durch die Observationswerte beschriebenen Zustand des Systems der Strecke anhand von Zielwerten bewertet, zur Erreichung der Zielwerte geeignete Aktionswerte auswählt und die Stellvorrichtung ansteuert. Die Regeleinrichtung zeichnet sich dadurch aus, dass der Regler einen Eingangswandler aufweist, welcher aus der Observationswerten wenigstens eine Wahrscheinlichkeitsverteilung der Observationswerte bildet, dass der Regler einen Aktions-Generator aufweist, welcher eine Menge möglicher Aktionswerte erzeugt und ein weiterer oder der gleiche Eingangswandler hieraus eine Menge zugeordneter Verteilungen bildet, dass der Regler eine Prozessmodelleinheit mit einem gespeicherten Prozessmodell aufweist, mittels dessen der Regler aus der Wahrscheinlichkeitsverteilung der Observationswerte und der Menge der den möglichen Aktionswerten zugeordneten Verteilungen, welche in die Prozessmodelleinheit gegeben werden, eine Menge von Verteilungen wahrscheinlicher zukünftiger Zustände des Systems prognostiziert, dass der Regler die Menge von Verteilungen wahrscheinlicher zukünftiger Zustände des Systems anhand der Zielwerte und/oder deren Verteilungen, insbesondere in einer Bewertereinheit, bewertet und wenigstens eine Wahrscheinlichkeitsverteilung der geeigneten Aktionswerte, insbesondere in einer Auswahleinheit, auswählt, und dass der Regler einen Ausgangswandler aufweist, welcher aus der Wahrscheinlichkeitsverteilung der Aktionswerte wenigstens einen Aktionswert bildet, wobei die angesteuerten Stellvorrichtungen aufgrund der Aktionswerte zugeordnete konkrete Aktionen ausführen.

Die EP 2 080 953 B1 offenbart einen Regelkreis und ein Verfahren zur Regelung eines Verbrennungsprozesses in einer Anlage, insbesondere einem Kraftwerk, einer Müllverbrennungsanlage oder einem Zementwerk, mit einer Strecke zum Umsetzen von Gut unter Zufuhr von Luft mittels des Verbrennungsprozesses unter Ausbildung wenigstens eines Flammenkörpers, wenigstens einer den Flammenkörper bildlich erfassenden Beobachtungsvorrichtung und weiterer Sensoren zur Ermittlung der den Zustand des Systems in der Anlage beschreibenden Zustandsvariablen, wenigstens einem Regler und/oder einem Rechner, zur Bewertung der Zustandsvariablen und ein Prozessmodell das geeignete Aktionen auswählt und durch die Aktionen ansteuerbare Stellvorrichtungen für wenigstens die Zufuhr von Gut und/oder Luft. Der Regelkreis bzw. das Verfahren zeichnet sich dadurch aus, dass das Prozessmodell für verschiedene Prozessdynamiken spezialisierte Funktionsapproximatoren bereithält, von denen ein Selektor eine auswählt, und ein dem ausgewählten Funktionsapproximator zugeordneter Regler zur Regelung des Regelkreises dient.

Die EP 2 422 246 B1 offenbart ein Regelsystem für einen zu regelnden, komplexen realen Prozess, insbesondere zur Regelung eines Verbrennungsprozesses in einem Kraftwerk, einer Müllverbrennungsanlage oder einem Zementwerk, welches hierarchisch in verschiedene Ebenen aufgeteilt ist, wobei eine erste Ebene den zu regelnden, komplexen, realen Prozess repräsentiert und durch eine Regelstrecke verwirklicht wird, eine zweite Ebene ein Interface zum Prozess repräsentiert und durch ein Prozessleitsystem realisiert wird, eine dritte Ebene die Regelung des Prozesses repräsentiert und durch wenigstens einen aktiven Regler realisiert wird, und eine vierte Ebene eine übergeordnete Aufsicht repräsentiert und durch einen Hauptregler realisiert wird, welches sich dadurch auszeichnet, dass der Hauptregler dazu eingerichtet ist, die Regelstrecke simulierende Simulatoren zu trainieren, eine Menge von Reglern zu entwickeln und an den Simulatoren zu testen, um den besten Regler aufzufinden und mit dem aktiven Regler zu vergleichen und diesen gegebenenfalls zu ersetzen, wobei die Menge von Reglern neue Regler und auch alte Regler enthält, die früher aktive Regler waren, wobei der aktive Regler die Regelabweichung zwischen Istwert der Regelstrecke und Sollwert zur Ermittlung der Stellgröße verwendet.

Die vorgenannten Verfahren, Vorrichtungen und Regelkreise betreffen die Regelung eines Verbrennungsprozesses in einer Anlage, insbesondere einem Kraftwerk, einer Müllverbrennungsanlage oder einem Zementwerk. Jedoch wird bei den aus dem Stand der Technik bekannten Verfahren, Vorrichtungen und Regelkreisen der Einfluss der Art und Weise der Vorverarbeitung des zu verarbeitenden Rohstoffs auf den Verbrennungsprozess und auf das Ergebnis des Verbrennungsprozesses nicht berücksichtigt.

Der vorliegenden Erfindung liegt daher die Aufgabe zugrunde, ein Verfahren und eine Vorrichtung bereitzustellen, zur Regelung eines Prozesses innerhalb eines Systems, insbesondere eines Verbrennungsprozesses innerhalb eines Kraftwerks, einer Müllverbrennungsanlage oder einem Zementwerk, wobei der zu regelnde Prozess eine Vorverarbeitung eines Rohstoffs, eine Verwertung des vorverarbeiteten Rohstoffs und eine Erfassung des Resultats der Verwertung des vorverarbeiteten Rohstoffs umfasst und hinsichtlich vorgegebener Regelungsziele optimiert.

Die Aufgabe wird erfindungsgemäß gelöst durch ein Verfahren zur Regelung eines Prozesses innerhalb eines Systems, insbesondere eines Verbrennungsprozesses innerhalb eines Kraftwerks, einer Müllverbrennungsanlage oder einem Zementwerk, wobei der zu regelnde Prozess eine Vorverarbeitung eines Rohstoffs, eine Verwertung des vorverarbeiteten Rohstoffs und eine Erfassung des Resultats der Verwertung des vorverarbeiteten Rohstoffs umfasst. Das erfindungsgemäße Verfahren umfasst dabei die folgenden Schritte:
- Erfassen von Eingangsvariablen der Vorverarbeitung des Rohstoffs über einen ersten vorgegebenen Zeitraum,
- Erfassen von Ausgangsvariablen der Vorverarbeitung des Rohstoffs über einen zweiten vorgegebenen Zeitraum, welche den Eingangsvariablen der Verwertung des vorverarbeiteten Rohstoffs entsprechen, und
- Erfassen von Ausgangsvariablen der Verwertung des vorverarbeiteten Rohstoffs über einen dritten vorgegebenen Zeitraum, welche dem Resultat der Verwertung des vorverarbeiteten Rohstoffs entsprechen.

Der Prozess innerhalb des Systems wird dabei geregelt durch:
- eine Anpassung der Vorverarbeitung des Rohstoffs mittels Ausführen von Stellaktionen betreffend die Vorverarbeitung des Rohstoffs, und/oder
- durch eine Anpassung der Verwertung des vorverarbeiteten Rohstoffs mittels Ausführen von Stellaktionen betreffend die Verwertung des vorverarbeiteten Rohstoffs.

Das erfindungsgemäße Verfahren umfasst weiterhin die folgenden Schritte:
- Erstellen eines ersten Prozessmodells, welches die Auswirkungen der Anpassung der Vorverarbeitung des Rohstoffs auf die Ausgangvariablen der Verwertung des vorverarbeiteten Rohstoffs beschreibt,
- Erstellen eines zweiten Prozessmodells, welches die Auswirkungen der Anpassung der Verwertung des vorverarbeiteten Rohstoffs auf die Ausgangsvariablen der Verwertung des vorverarbeiteten Rohstoffs beschreibt, und
- Erstellen eines dritten Prozessmodells, welches die Auswirkungen der Anpassung der Vorverarbeitung des Rohstoffs und der Anpassung der Verwertung des vorverarbeiteten Rohstoffs auf die Ausgangsvariablen der Verwertung des vorverarbeiteten Rohstoffs beschreibt.

Erfindungsgemäß werden das erste Prozessmodell, das zweite Prozessmodell und das dritte Prozessmodell jeweils für wenigstens zwei unterschiedliche Zeitskalen erstellt, wobei der Prozess innerhalb des Systems geregelt wird durch eine Anpassung der Vorverarbeitung des Rohstoffs und/oder der Anpassung der Verwertung des vorverarbeiteten Rohstoffs unter Berücksichtigung von Regelungszielen für das Resultat der Verwertung des vorverarbeiteten Rohstoffs gemäß den Vorhersagen wenigstens eines der erstellten Prozessmodelle, vorzugsweise des Prozessmodells das aktuell die besten Vorhersagen für den Prozess innerhalb des Systems liefert.

Das erfindungsgemäße Verfahren zur Regelung eines Prozesses innerhalb eines Systems, insbesondere eines Verbrennungsprozesses innerhalb eines Kraftwerks, einer Müllverbrennungsanlage oder einem Zementwerk, umfasst eine Vorverarbeitung eines Rohstoffs, eine Verwertung des vorverarbeiteten Rohstoffs und eine Erfassung des Resultats der Verwertung des vorverarbeiteten Rohstoffs. Die Vorverarbeitung des Rohstoffs umfasst beispielsweise die Zerkleinerung/Mahlung des Rohstoffs, eine Vorerwärmung des Rohstoffs und/oder eine Vermischung von unterschiedlichen Rohstoffen.

Erfindungsgemäß werden die Eingangsvariablen der Vorverarbeitung des Rohstoffs, die Ausgangsvariablen der Vorverarbeitung des Rohstoffs und die Ausgangsvariablen der Verwertung des vorverarbeiteten Rohstoffs über einen jeweiligen vorgegebenen Zeitraum erfasst. Die Ausgangsvariablen der Vorverarbeitung des Rohstoffs und/oder der Verwertung des vorverarbeiteten Rohstoffs werden beispielsweise durch Sensoren automatisch oder mittels automatischer oder manueller Probeentnahmen erfasst.

Zur Regelung des Prozesses innerhalb des Systems kann die Vorverarbeitung des Rohstoffs und/oder die Verwertung des vorverarbeiteten Rohstoffs angepasst werden. Die Vorverarbeitung des Rohstoffs wird beispielsweise durch eine Anpassung der Zerkleinerung/Mahlung des Rohstoffs, einer Anpassung der Vorerwärmung des Rohstoffs und/oder durch eine Anpassung der Mischung unterschiedlicher Rohstoffe angepasst. Die Verwertung des vorverarbeiteten Rohstoffs kann beispielsweise durch die Zufuhr on Sauerstoff oder anderen Stoffen, der Anpassung der Verbrennung des vorverarbeiteten Rohstoffs oder durch Maßnahmen betreffend den Brennkessel angepasst werden.

Das erfindungsgemäße Verfahren umfasst dabei die folgenden Schritte:
- Erstellen eines ersten Prozessmodells, welches die Auswirkungen der Anpassung der Vorverarbeitung des Rohstoffs auf die Ausgangvariablen der Verwertung des vorverarbeiteten Rohstoffs beschreibt,
- Erstellen eines zweiten Prozessmodells, welches die Auswirkungen der Anpassung der Verwertung des vorverarbeiteten Rohstoffs auf die Ausgangsvariablen der Verwertung des vorverarbeiteten Rohstoffs beschreibt, und
- Erstellen eines dritten Prozessmodells, welches die Auswirkungen der Anpassung der Vorverarbeitung des Rohstoffs und der Anpassung der Verwertung des vorverarbeiteten Rohstoffs auf die Ausgangsvariablen der Verwertung des vorverarbeiteten Rohstoffs beschreibt.

Das erste Prozessmodell beschreibt die Auswirkungen von Anpassungen der Vorverarbeitung des Rohstoffs auf die Ausgangsvariablen der Verwertung des vorverarbeiteten Rohstoffs, also die Auswirkungen von Anpassungen in der Vorverarbeitung auf das endgültige Resultat des zu regelnden Prozesses. Das zweite Prozessmodell beschreibt die Auswirkungen der Anpassung der Verwertung des vorverarbeiteten Rohstoffs auf die Ausgangsvariablen der Verwertung des vorverarbeiteten Rohstoffs, also die Auswirkungen von Anpassungen an der Verwertung des vorverarbeiteten Rohstoffs. Und das dritte Prozessmodell kombiniert das erste Prozessmodell und das zweite Prozessmodell und beschreibt die Auswirkungen von einer Anpassung der Vorverarbeitung des Rohstoffs und der Verwertung des vorverarbeiteten Rohstoffs auf die Ausgangsvariablen der Verwertung des vorverarbeiteten Rohstoffs.

Der Erfindung liegt dabei die Erkenntnis zugrunde, dass der Prozess innerhalb des Systems unter Berücksichtigung der Regelungsziele durch eines der vorgenannten Prozessmodelle hinreichend genau abgebildet wird um den Prozess innerhalb des Systems zu regeln. Je nach aktueller Prozesssituation kann eine Anpassung der Vorverarbeitung des Rohstoffs oder eine Anpassung der Verwertung des vorverarbeiteten Rohstoffs oder eine Anpassung der Vorverarbeitung des Rohstoffs und eine Anpassung der Verwertung des vorverarbeiteten Rohstoffs notwendig sein, um die Regelungsziele zu erreichen und zukünftig einzuhalten.

Gemäß der Erfindung werden das erste Prozessmodell, das zweite Prozessmodell und das dritte Prozessmodell jeweils für wenigstens zwei unterschiedliche Zeitskalen erstellt. Vorzugsweise wird dabei zwischen einer kurzfristigen und einer langfristigen Vorhersage unterschieden.

Die Unterteilung in kurzfristige störungsbedingte Änderungen und längerfristigen störungsbedingten Änderungen ist abhängig von dem zu regelnden Prozess innerhalb des Systems. So können bei einem Verbrennungsprozess in einem Kraftwerk kurzfristige Störungsbedingte Änderungen durchaus über mehrere Stunden hinweg auftreten. Die Unterteilung in kurzfristige störungsbedingte Änderungen und längerfristigen störungsbedingten Änderungen erfolgt vorzugsweise unter Berücksichtigung der Länge des zu regelnden Prozesses in dem System.

Erfindungsgemäß wird der Prozess innerhalb des Systems geregelt durch eine Anpassung der Vorverarbeitung des Rohstoffs und/oder der Anpassung der Verwertung des vorverarbeiteten Rohstoffs unter Berücksichtigung von Regelungszielen für das Resultat der Verwertung des vorverarbeiteten Rohstoffs gemäß den Vorhersagen wenigstens eines der erstellten Prozessmodelle, vorzugsweise des Prozessmodells das aktuell die besten Vorhersagen für den Prozess innerhalb des Systems liefert.

Eine Erstellung von wenigstens drei Prozessmodellen für jeweils wenigstens zwei unterschiedliche Zeitskalen hat den Vorteil, dass sowohl für kurzfristige wie auch langfristige Regelungsszenarien für das Resultat der Verwertung des vorverarbeiteten Rohstoffs ein Prozessmodell zur Verfügung steht, welches den Prozess in dem System mit hinreichender Genauigkeit abbildet um die Regelungsziele einzuhalten.

Nach einer bevorzugten Variante der Erfindung werden das erste Prozessmodell, das zweite Prozessmodell und/oder das dritte Prozessmodell für drei unterschiedliche Zeitskalen erstellt. Wie bereits zuvor ausgeführt betreffen die unterschiedlichen Zeitskalen eine kurzfristige und eine langfristige Vorhersage des Prozesses innerhalb des zu regelnden Prozesses. Die dritte Zeitskala betrifft weiterhin eine störungsbedingte Vorhersage des Prozesses innerhalb des Systems. Somit lässt sich anhand der dritten Zeitskala bestimmen, ob aufgrund einer Störung eine Regelung vorgenommen werden sollte oder die Störung keinen maßgeblichen Einfluss auf die Regelungsziele hat. Auch kann mittels einer derartigen störungsbedingten Vorhersage eine Aussage darüber getroffen werden, ob die Störung ausgeregelt werden kann oder ob eine Wartungsmaßnahme oder ähnliches durchgeführt werden muss.

Gemäß einer Variante der Erfindung wird bei der Auswahl eines der erstellten Prozessmodelle für die Regelung des Prozesses innerhalb des Systems zunächst eine relevante Zeitskala bestimmt. Der Erfindung liegt die Erkenntnis zugrunde, dass sich kurzfristige Abweichungen der Ausgangsvariablen der Verwertung des vorverarbeiteten Rohstoffs von den Regelungszielen von langfristigen Abweichungen der Ausgangsvariablen der Verwertung des vorverarbeiteten Rohstoffs von den Regelungszielen unterscheiden. Da sich die Vorhersagen der drei langfristigen Prozessmodelle von den drei kurzfristigen Prozessmodellen unterscheiden, findet erfindungsgemäß zunächst eine Auswahl hinsichtlich der relevanten Zeitskala statt.

Nach einer Variante der Erfindung wird die relevante Zeitskala anhand der über den ersten vorgegebenen Zeitraum, über den zweiten vorgegebenen Zeitraum und über den dritten vorgegebenen Zeitraum erfassten Eingangs- und Ausgangsvariablen bestimmt. Vorzugsweise werden dabei insbesondere Änderungen in Eingangs- und Ausgangsvariablen berücksichtigt. So sind größere Änderungen innerhalb eines kurzen Zeitraums in den Ausgangsvariablen ein Indiz dafür, dass eine kurzfristige Zeitskala relevant ist, während eine langsame und stetige Änderung in den Ausgangsvariablen ein Indiz für eine langfristige Zeitskala ist.

In einer bevorzugten Variante der Erfindung werden die für eine bestimmte Zeitskala erstellten Prozessmodelle miteinander verglichen, um ein Prozessmodell für die Regelung des Prozesses innerhalb des Systems zu bestimmen. Nachdem also eine relevante Zeitskala identifiziert wurde, wird nachfolgend das Prozessmodell ermittelt, welches aktuell die besten Vorhersagen für den Prozess innerhalb des Systems liefert. Dabei werden bevorzugt die aktuellen und die zurückliegenden Vorhersagen der einzelnen Prozessmodelle mit den bestimmten zugehörigen Ausgangsvariablen der Verwertung des vorverarbeiteten Rohstoffs verglichen und mit den Regelungszielen abgeglichen. Dadurch lässt sich das Prozessmodell bestimmen, welches aktuell die besten Vorhersagen für den Prozess innerhalb des Systems liefert.

Gemäß einer besonders bevorzugten Variante der Erfindung erfolgt die Auswahl eines Prozessmodells für die Regelung des Prozesses innerhalb des Systems durch einen in einem neuralen Netzwerk implementierten Algorithmus. Das neuronale Netzwerk basiert dabei insbesondere auf evolutionären Strategien, genetischen Algorithmen, genetischer Programmierung oder evolutionärer Programmierung bzw. werden die Prozessmodelle auf Basis dessen trainiert, vorzugsweise im Rahmen eines autonomen Auswahl- und/oder Optimierungsprozesses.

Die Verwendung von neuronalen Netzwerken hat den Vorteil, dass die Auswahl der Prozessmodelle über die Prozessdauer aufgrund der selbstlernenden Eigenschaften der neuronalen Netzwerke stetig zunimmt.

Nach einer zweckmäßigen Variante der Erfindung erfolgt die Auswahl des Prozessmodells für die Regelung des Prozesses innerhalb des Systems zumindest teilweise automatisch, vorzugsweise vollautomatisch. So kann es beispielsweise bei der Steuerung von risikobehafteten bzw. sicherheitsrelevanten Prozessen notwendig und/oder sinnvoll sein, dass die Auswahl des Prozessmodells für die Regelung des Prozesses innerhalb des Systems zwar automatisch erfolgt, aber vor der Anwendung des neuen ausgewählten Prozessmodells eine manuelle Bestätigung des zuständigen Bedienpersonals erfolgt.

In einer Variante umfasst das erfindungsgemäße Verfahren die Schritte des Erfassens von Zustandsvariablen der Vorverarbeitung des Rohstoffs und des Erfassens von Zustandsvariablen der Verwertung des vorverarbeiteten Rohstoffs. Es werden also nicht nur die Eingangs- und Ausgangsvariablen der Vorverarbeitung des Rohstoffs und der Verwertung des vorverarbeiteten Rohstoffs erfasst, sondern auch die jeweiligen aktuellen Zustandsvariablen. Dadurch lässt sich die Genauigkeit des erfindungsgemäßen Verfahrens verbessern.

Nach einer zweckmäßigen Variante der Erfindung werden bei der Erstellung des ersten Prozessmodells, des zweiten Prozessmodells und/oder des dritten Prozessmodells die Zustandsvariablen der Vorverarbeitung des Rohstoffs und/oder die Zustandsvariablen der Verwertung des vorverarbeiteten Rohstoffs berücksichtigt, wodurch sich die Vorhersagegenauigkeit der erstellten Prozessmodelle verbessern lässt.

Die Zustandsvariablen werden beispielsweise automatisch mittels Sensoren oder manuell oder automatisch mittels Probeentnahmen erfasst.

Gemäß einer Variante des erfindungsgemäßen Verfahrens werden die erstellten Prozessmodelle kontinuierlich an das Verhalten des zu regelnden Prozesses innerhalb des Systems angepasst. Die Vorhersagegenauigkeiten der erstellten Prozessmodelle erhöht sich durch diese selbstlernende Eigenschaft über die Dauer des Prozesses stetig.

Die Prozessmodelle werden beispielsweise durch einen Probelauf des Systems und/oder durch Expertenwissen erstellt. In dem Probelauf des Systems ist es vorteilhaft, wenn bewusst von den üblichen Zustandsvariablen abgewichen wird und Extremzustände innerhalb des Prozesses angefahren werden. Besonders zweckmäßig ist es, wenn zunächst ein Prozessmodell durch Expertenwissen erstellt wird und dieses nachfolgend durch einen Probelauf des Systems mit unterschiedlichen Zuständen weiter verbessert bzw. trainiert wird.

Nach einer zweckmäßigen Variante der Erfindung werden die Prozessmodelle jeweils mittels eines computergestützten neuronalen Netzwerks erstellt und insbesondere kontinuierlich angepasst (trainiert). Das neuronale Netzwerk basiert dabei insbesondere auf evolutionären Strategien, genetischen Algorithmen, genetischer Programmierung oder evolutionärer Programmierung bzw. werden die Prozessmodelle auf Basis dessen trainiert, vorzugsweise im Rahmen eines autonomen Auswahl- und/oder Optimierungsprozesses.

Die Verwendung von neuronalen Netzwerken hat den Vorteil, dass die Vorhersagegenauigkeit der Prozessmodelle über die Prozessdauer aufgrund der selbstlernenden Eigenschaften der neuronalen Netzwerke stetig zunimmt.

In einer Variante des erfindungsgemäßen Verfahrens berücksichtigen die Prozessmodelle jeweils mehrere in die Zukunft gerichtete angenommene Auswirkungen der Anpassung der Vorverarbeitung des Rohstoffs und/oder Auswirkungen der Anpassung der Verwertung des vorverarbeiteten Rohstoffs auf die Ausgangsvariablen der Verwertung des vorverarbeiteten Rohstoffs. Die erstellten Prozessmodelle berücksichtigen somit nicht nur die aktuelle Prozesssituation innerhalb des Systems und die Regelungszeile, sondern auch wie die Regelungsziele möglichst langfristig eingehalten werden können, vorzugsweise bei einer Minimierung der Anpassung der Vorverarbeitung des Rohstoffs mittels Ausführen von Stellaktionen betreffend die Vorverarbeitung des Rohstoffs und/oder der Anpassung der Verwertung des vorverarbeiteten Rohstoffs mittels Ausführen von Stellaktionen betreffend die Verwertung des vorverarbeiteten Rohstoffs.

Zweckmäßigerweise wird das Verfahren in Echtzeit zur Regelung des Prozesses innerhalb des Systems ausgeführt.

Gemäß einer besonders bevorzugten Variante der Erfindung basieren die Prozessmodelle auf der Methode der numerischen Strömungsmechanik.

Die Aufgabe wird ferner gelöst durch eine Vorrichtung zur Ausführung eines Verfahrens zur Regelung eines Prozesses innerhalb eines Systems, insbesondere eines Verbrennungsprozesses innerhalb eines Kraftwerks, einer Müllverbrennungsanlage oder einem Zementwerk, gemäß der vorliegenden Erfindung, wobei die Vorrichtung wenigstens eine Recheneinrichtung und Mittel zum Erfassen von Variablen des Systems und Schnittstellen zur Übermittlung von Stellaktionen an das System umfasst. Die Vorrichtung kann dabei beispielsweise als Regelkreis ausgebildet sein. Zweckmäßigerweise ist Sie in die Prozesssteuerung des zu regelnden Systems integriert.

Nachfolgend wird die Erfindung anhand eines Ausführungsbeispiels näher erläutert. Es zeigt:

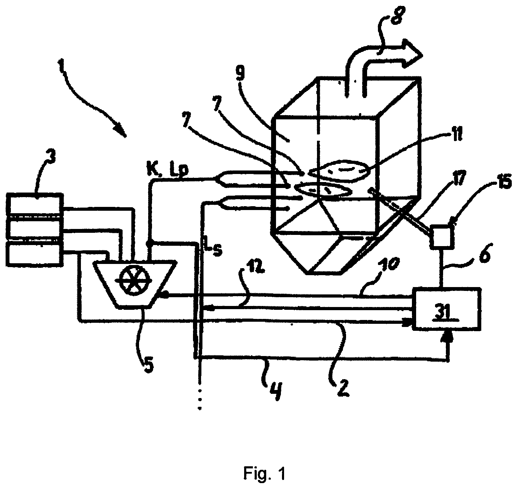

Fig. 1 ein Kraftwerk, dessen Verbrennungsprozess mittels eines erfindungsgemäßen Verfahrens geregelt wird.

Das erfindungsgemäße Verfahren dient zur Regelung eines Prozesses innerhalb eines Systems, insbesondere eines Verbrennungsprozesses innerhalb eines Kraftwerks 1, einer Müllverbrennungsanlage oder einem Zementwerk.

Das Kraftwerk 1 aus Figur 1 umfasst mehrere Bunker 3 mit grobkörnigem Kohlkonzentrat, Mittelkorn und Feinkorn, aus welchen wenigstens eine Mühle 5 beschickt wird. Statt Kohle könnte im Prinzip auch ein anderer Brennstoff verwendet oder beigemischt werden. Die wenigstens eine Mühle 5 dient zur Vorverarbeitung des in den Bunkern 3 gelagerten Materials.

Gemäß dem erfindungsgemäßen Verfahren werden die Eingangsvariablen der Vorverarbeitung 2 des Rohstoffs, also der Mühle 5, über einen ersten Zeitraum erfasst. Dies erfolgt automatisch mittels entsprechender Sensoren oder manuell und/oder automatisch mittels Probenentnahmen.

Die von der wenigstens einen Mühle 5 ausgegebene Kohle K wird zusammen mit Primärluft L_{P} einem Brenner 7 in einem Ofen 9 zugeführt, wobei vorzugsweise eine Mühle 5 mehrere Brenner 7 beschickt.

Erfindungsgemäß werden die Ausgangsvariablen der Vorverarbeitung 4 des Rohstoffs, also die Variablen der gemahlenen Kohle K nach der Mühle 5 und vor dem Ofen 9, über einen zweiten vorgegebenen Zeitraum erfasst. Dies erfolgt automatisch mittels entsprechender Sensoren oder manuell und/oder automatisch mittels Probenentnahmen. Die Ausgangsvariablen der Kohle K der Mühle 5 entsprechen den Eingangsvariablen der Kohle K des Ofens 9.

Mittels der Brenner 7 des Ofens 9 wird die Kohle K verbrannt, also im Ofen 9 verwertet. Dabei wird beispielsweise unterhalb der Brenner 7 Sekundärluft Ls in den Ofen geblasen. Gemäß dem erfindungsgemäßen Verfahren werden die Ausgangsvariablen der Verwertung des vorverarbeiteten Rohstoffs 6, also der Verbrennung der Kohle K mittels der Brenner 7, über einen dritten vorgegebenen Zeitraum erfasst. Dies entspricht dem Resultat der Verwertung des vorverarbeiteten Rohstoffs.

Die Ausgangsvariablen der Verwertung des vorverarbeiteten Rohstoffs 6 werden beispielsweise mittels einer optischen Messvorrichtung 15 erfasst, welche ein in den Ofen ragendes Boroskop 17 aufweist. Das Boroskop 17 bildet ein Bild der Flammen 11 der Brenner 7 in das Innere der Messvorrichtung ab, welche das Bild weiterverarbeitet und somit Ausgangsvariablen der Verwertung des vorverarbeiteten Rohstoffs 6. Alternativ und/oder zusätzlich können Bestandteile der Abluft 8 des Verbrennungsprozesses mittels Sensoren und/oder Probenentnahmen als Ausgangsvariablen der Verwertung des vorverarbeiteten Rohstoffs 6 erfasst werden.

Der Prozess innerhalb des Systems, also die Verbrennung in dem Ofen 9 des Kraftwerks 1, wird geregelt durch eine Anpassung der Vorverarbeitung des Rohstoffs 10 mittels Ausführen von Stellaktionen betreffend die Vorverarbeitung des Rohstoffs, also hinsichtlich der Mahlung des Rohstoffs. Alternativ oder zusätzlich wird der Prozess innerhalb des Systems geregelt durch eine Anpassung der Verwertung des vorverarbeiteten Rohstoffs 12 mittels Ausführen von Stellaktionen betreffend die Verwertung des vorverarbeiteten Rohstoffs, beispielsweise durch eine Anpassung der Zufuhr der Sekundärluft Ls in den Ofen 9.

Die erfassten Eingangsvariablen der Vorverarbeitung 2, der Ausgangsvariablen der Vorverarbeitung 4 und der Ausgangsvariablen der Verwertung des vorverarbeiteten Rohstoffs werden eine Recheneinrichtung 31 übertragen, welche zur Regelung des Prozesses innerhalb des Systems, also der Verbrennung in dem Kraftwerk 1 ausgebildet ist. Dazu wird von der Recheneinrichtung 31 die Vorverarbeitung des Rohstoffs angepasst 10, mittels Ausführen von Stellaktionen betreffend die Vorverarbeitung des Rohstoffs und/oder die Verwertung des vorverarbeiteten Rohstoffs angepasst 12, mittels Ausführen von Stellaktionen betreffend die Verwertung des vorverarbeiteten Rohstoffs.

Innerhalb der Recheneinrichtung 31 wird ein erstes Prozessmodell, welches die Auswirkungen der Anpassung der Vorverarbeitung des Rohstoffs 10 auf die Ausgangsvariablen der Verwertung des vorverarbeiteten Rohstoffs 6 beschreibt und ein zweites Prozessmodell, welches die Auswirkungen der Anpassung der Verwertung des vorverarbeiteten Rohstoffs 12 auf die Ausgangsvariablen der Verwertung des vorverarbeiteten Rohstoffs 6 beschreibt, erstellt. Ferner wird in der Recheneinrichtung 31 ein drittes Prozessmodell erstellt, welches die Auswirkungen der Anpassung der Vorverarbeitung des Rohstoffs 10 und der Anpassung der Verwertung des vorverarbeiteten Rohstoffs 12 auf die Ausgangsvariablen der Verwertung des vorverarbeiteten Rohstoffs 6 beschreibt.

Erfindungsgemäß werden das erste Prozessmodell, das zweite Prozessmodell und das dritte Prozessmodell jeweils für wenigstens zwei unterschiedliche Zeitskalen erstellt.

Der Prozess innerhalb des Systems wird geregelt durch eine Anpassung der Vorverarbeitung des Rohstoffs 10 und/oder der Anpassung der Verwertung des vorverarbeiteten Rohstoffs 12 unter Berücksichtigung von Regelungszielen für das Resultat der Verwertung des vorverarbeiteten Rohstoffs gemäß den Vorhersagen wenigstens eines der erstellten Prozessmodelle, vorzugsweise des Prozessmodells das aktuell die besten Vorhersagen für den Prozess innerhalb des Systems liefert.

Eine Erstellung von wenigstens drei Prozessmodellen für jeweils wenigstens zwei unterschiedliche Zeitskalen hat den Vorteil, dass für kurzfristige und langfristige Regelungsszenarien ein Prozessmodell zur Verfügung steht, welches den Prozess in dem System mit hinreichender Genauigkeit abbildet um die Regelungsziele einzuhalten.

Nach einer bevorzugten Variante der Erfindung werden das erste Prozessmodell, das zweite Prozessmodell und/oder das dritte Prozessmodell für drei unterschiedliche Zeitskalen erstellt. Wie bereits zuvor ausgeführt betreffen die unterschiedlichen Zeitskalen eine kurzfristige und eine langfristige Vorhersage des Prozesses innerhalb des zu regelnden Prozesses. Die dritte Zeitskala betrifft weiterhin eine störungsbedingte Vorhersage des Prozesses innerhalb des Systems. Somit lässt sich anhand der dritten Zeitskala bestimmen, ob aufgrund einer Störung eine Regelung vorgenommen werden sollte oder die Störung keinen maßgeblichen Einfluss auf die Regelungsziele hat. Auch kann mittels einer derartigen störungsbedingten Vorhersage eine Aussage darüber getroffen werden, ob die Störung ausgeregelt werden kann oder ob eine Wartungsmaßnahme oder ähnliches durchgeführt werden muss.

Gemäß einer Variante der Erfindung wird bei der Auswahl eines der erstellten Prozessmodelle für die Regelung des Prozesses innerhalb des Systems zunächst eine relevante Zeitskala bestimmt. Der Erfindung liegt die Erkenntnis zugrunde, dass sich kurzfristige Abweichungen der Ausgangsvariablen der Verwertung des vorverarbeiteten Rohstoffs von den Regelungszielen von langfristigen Abweichungen der Ausgangsvariablen der Verwertung des vorverarbeiteten Rohstoffs von den Regelungszielen unterscheiden. Da sich die Vorhersagen der drei langfristigen Prozessmodelle von den drei kurzfristigen Prozessmodellen unterscheiden, findet erfindungsgemäß zunächst eine Auswahl hinsichtlich der relevanten Zeitskala statt.

Nach einer Variante der Erfindung wird die relevante Zeitskala anhand der über den ersten vorgegebenen Zeitraum, über den zweiten vorgegebenen Zeitraum und über den dritten vorgegebenen Zeitraum erfassten Eingangs- und Ausgangsvariablen 2, 4, 6 bestimmt. Vorzugsweise werden dabei insbesondere Änderungen in Eingangs- und Ausgangsvariablen berücksichtigt. So sind größere Änderungen innerhalb eines kurzen Zeitraums in den Ausgangsvariablen ein Indiz dafür, dass eine kurzfristige Zeitskala relevant ist, während eine langsame und stetige Änderung in den Ausgangsvariablen ein Indiz für eine langfristige Zeitskala ist.

In einer bevorzugten Variante der Erfindung werden die für eine bestimmte Zeitskala erstellten Prozessmodelle miteinander verglichen, um ein Prozessmodell für die Regelung des Prozesses innerhalb des Systems zu bestimmen. Nachdem also eine relevante Zeitskala identifiziert wurde, wird nachfolgend das Prozessmodell ermittelt, welches aktuell die besten Vorhersagen für den Prozess innerhalb des Systems liefert. Dabei werden bevorzugt die aktuellen und die zurückliegenden Vorhersagen der einzelnen Prozessmodelle mit den bestimmten zugehörigen Ausgangsvariablen der Verwertung des vorverarbeiteten Rohstoffs verglichen und mit den Regelungszielen abgeglichen. Dadurch lässt sich das Prozessmodell bestimmen, welches aktuell die besten Vorhersagen für den Prozess innerhalb des Systems liefert.

Gemäß einer besonders bevorzugten Variante der Erfindung erfolgt die Auswahl eines Prozessmodells für die Regelung des Prozesses innerhalb des Systems durch einen in einem neuralen Netzwerk implementierten Algorithmus. Das neuronale Netzwerk basiert dabei insbesondere auf evolutionären Strategien, genetischen Algorithmen, genetischer Programmierung oder evolutionärer Programmierung bzw. werden die Prozessmodelle auf Basis dessen trainiert, vorzugsweise im Rahmen eines autonomen Auswahl- und/oder Optimierungsprozesses.

Die Verwendung von neuronalen Netzwerken hat den Vorteil, dass die Auswahl der Prozessmodelle über die Prozessdauer aufgrund der selbstlernenden Eigenschaften der neuronalen Netzwerke stetig zunimmt.

Nach einer zweckmäßigen Variante der Erfindung erfolgt die Auswahl des Prozessmodells für die Regelung des Prozesses innerhalb des Systems zumindest teilweise automatisch, vorzugsweise vollautomatisch.

In einer Variante umfasst das erfindungsgemäße Verfahren die Schritte des Erfassens von Zustandsvariablen der Vorverarbeitung des Rohstoffs und des Erfassens von Zustandsvariablen der Verwertung des vorverarbeiteten Rohstoffs. Es werden also nicht nur die Eingangs- und Ausgangsvariablen der Vorverarbeitung des Rohstoffs und der Verwertung des vorverarbeiteten Rohstoffs erfasst, sondern auch die jeweiligen aktuellen Zustandsvariablen. Dadurch lässt sich die Genauigkeit des erfindungsgemäßen Verfahrens verbessern.

Nach einer zweckmäßigen Variante der Erfindung werden bei der Erstellung des ersten Prozessmodells, des zweiten Prozessmodells und/oder des dritten Prozessmodells die Zustandsvariablen der Vorverarbeitung des Rohstoffs und/oder die Zustandsvariablen der Verwertung des vorverarbeiteten Rohstoffs berücksichtigt, wodurch sich die Vorhersagegenauigkeit der erstellten Prozessmodelle verbessern lässt.

Die Zustandsvariablen werden beispielsweise automatisch mittels Sensoren oder manuell oder automatisch mittels Probeentnahmen erfasst.

Gemäß einer Variante des erfindungsgemäßen Verfahrens werden die erstellten Prozessmodelle kontinuierlich an das Verhalten des zu regelnden Prozesses innerhalb des Systems angepasst. Die Vorhersagegenauigkeiten der erstellten Prozessmodelle erhöht sich durch diese selbstlernende Eigenschaft über die Dauer des Prozesses stetig.

Die Prozessmodelle werden beispielsweise durch einen Probelauf des Systems und/oder durch Expertenwissen erstellt. In dem Probelauf des Systems ist es vorteilhaft, wenn bewusst von den üblichen Zustandsvariablen abgewichen wird und Extremzustände innerhalb des Prozesses angefahren werden. Besonders zweckmäßig ist es, wenn zunächst ein Prozessmodell durch Expertenwissen erstellt wird und dieses nachfolgend durch einen Probelauf des Systems mit unterschiedlichen Zuständen weiter verbessert bzw. trainiert wird.

Nach einer zweckmäßigen Variante der Erfindung werden die Prozessmodelle jeweils mittels eines computergestützten neuronalen Netzwerks erstellt und insbesondere kontinuierlich angepasst (trainiert). Das neuronale Netzwerk basiert dabei insbesondere auf evolutionären Strategien, genetischen Algorithmen, genetischer Programmierung oder evolutionärer Programmierung bzw. werden die Prozessmodelle auf Basis dessen trainiert, vorzugsweise im Rahmen eines autonomen Auswahl- und/oder Optimierungsprozesses.

Die Verwendung von neuronalen Netzwerken hat den Vorteil, dass die Vorhersagegenauigkeit der Prozessmodelle über die Prozessdauer aufgrund der selbstlernenden Eigenschaften der neuronalen Netzwerke stetig zunimmt.

In einer Variante des erfindungsgemäßen Verfahrens berücksichtigen die Prozessmodelle jeweils mehrere in die Zukunft gerichtete angenommene Auswirkungen der Anpassung der Vorverarbeitung des Rohstoffs und/oder Auswirkungen der Anpassung der Verwertung des vorverarbeiteten Rohstoffs auf die Ausgangsvariablen der Verwertung des vorverarbeiteten Rohstoffs. Die erstellten Prozessmodelle berücksichtigen somit nicht nur die aktuelle Prozesssituation innerhalb des Systems und die Regelungszeile, sondern auch wie die Regelungsziele möglichst langfristig eingehalten werden können, vorzugsweise bei einer Minimierung der Anpassung der Vorverarbeitung des Rohstoffs 10 mittels Ausführen von Stellaktionen betreffend die Vorverarbeitung des Rohstoffs und/oder der Anpassung der Verwertung des vorverarbeiteten Rohstoffs 12 mittels Ausführen von Stellaktionen betreffend die Verwertung des vorverarbeiteten Rohstoffs.

Zweckmäßigerweise wird das Verfahren in Echtzeit zur Regelung des Prozesses innerhalb des Systems ausgeführt.

Gemäß einer besonders bevorzugten Variante der Erfindung basieren die Prozessmodelle auf der Methode der numerischen Strömungsmechanik.

### Bezugszeichenliste

- 1: Kraftwerk
- 2: Erfassung Eingangsvariablen der Vorverarbeitung
- 3: Bunker
- 4: Erfassung Ausgangsvariablen der Vorverarbeitung
- 5: Mühle
- 6: Erfassung Ausgangsvariablen der Verwertung
- 7: Brenner
- 8: Abluft Verbrennungsprozess
- 9: Ofen
- 10: Anpassung der Vorverarbeitung des Rohstoffs
- 11: Flamme
- 12: Anpassung der Verwertung des vorverarbeiteten Rohstoffs
- 15: Messvorrichtung
- 17: Boroskop
- 31: Recheneinrichtung
- K: Kohle
- L_{P}: Primärluft
- Ls: Sekundärluft

## Patentansprüche

1. Verfahren zur Regelung eines Prozesses innerhalb eines Systems, insbesondere eines Verbrennungsprozesses innerhalb eines Kraftwerks (1), einer Müllverbrennungsanlage oder einem Zementwerk, wobei der zu regelnde Prozess eine Vorverarbeitung eines Rohstoffs, eine Verwertung des vorverarbeiteten Rohstoffs und eine Erfassung des Resultats der Verwertung des vorverarbeiteten Rohstoffs umfasst, wobei das Verfahren die folgenden Schritte umfasst:
- Erfassen von Eingangsvariablen der Vorverarbeitung (2) des Rohstoffs über einen ersten vorgegebenen Zeitraum,
- Erfassen von Ausgangsvariablen der Vorverarbeitung (4) des Rohstoffs über einen zweiten vorgegebenen Zeitraum, welche den Eingangsvariablen der Verwertung des vorverarbeiteten Rohstoffs entsprechen, und
- Erfassen von Ausgangsvariablen der Verwertung (6) des vorverarbeiteten Rohstoffs über einen dritten vorgegebenen Zeitraum, welche dem Resultat der Verwertung des vorverarbeiteten Rohstoffs entsprechen;
wobei der Prozess innerhalb des Systems geregelt wird durch:
- eine Anpassung der Vorverarbeitung (10) des Rohstoffs mittels Ausführen von Stellaktionen betreffend die Vorverarbeitung des Rohstoffs, und/oder
- durch eine Anpassung der Verwertung (12) des vorverarbeiteten Rohstoffs 42 mittels Ausführen von Stellaktionen betreffend die Verwertung des vorverarbeiteten Rohstoffs;
wobei das Verfahren weiterhin die folgenden Schritte umfasst:
- Erstellen eines ersten Prozessmodells, welches die Auswirkungen der Anpassung der Vorverarbeitung (10) des Rohstoffs auf die Ausgangvariablen der Verwertung des vorverarbeiteten Rohstoffs beschreibt,
- Erstellen eines zweiten Prozessmodells, welches die Auswirkungen der Anpassung der Verwertung (12) des vorverarbeiteten Rohstoffs auf die Ausgangsvariablen der Verwertung des vorverarbeiteten Rohstoffs beschreibt, und
- Erstellen eines dritten Prozessmodells, welches die Auswirkungen der Anpassung der Vorverarbeitung (10) des Rohstoffs und der Anpassung der Verwertung (12) des vorverarbeiteten Rohstoffs auf die Ausgangsvariablen der Verwertung des vorverarbeiteten Rohstoffs beschreibt;
wobei das erste Prozessmodell, das zweite Prozessmodell und das dritte Prozessmodell jeweils für wenigstens zwei unterschiedliche Zeitskalen erstellt werden,
wobei der Prozess innerhalb des Systems geregelt wird durch eine Anpassung der Vorverarbeitung (10) des Rohstoffs und/oder der Anpassung der Verwertung (12) des vorverarbeiteten Rohstoffs unter Berücksichtigung von Regelungszielen für das Resultat der Verwertung des vorverarbeiteten Rohstoffs gemäß den Vorhersagen wenigstens eines der erstellten Prozessmodelle.

2. Verfahren nach Anspruch 1, wobei bei einer Auswahl eines der erstellten Prozessmodelle für die Regelung des Prozesses innerhalb des Systems zunächst eine relevante Zeitskala bestimmt wird.

3. Verfahren nach Anspruch 2, wobei die relevante Zeitskala anhand der über den ersten vorgegebenen Zeitraum, über den zweiten vorgegebenen Zeitraum und über den dritten vorgegebenen Zeitraum erfassten Eingangs- und Ausgangsvariablen bestimmt wird.

4. Verfahren nach Anspruch 2 oder Anspruch 3, wobei die für eine bestimmte Zeitskala erstellten Prozessmodelle miteinander verglichen werden, um ein Prozessmodell für die Regelung des Prozesses innerhalb des Systems zu bestimmen.

5. Verfahren nach einem der Ansprüche 1 bis 4, wobei eine Auswahl eines Prozessmodells für die Regelung des Prozesses innerhalb des Systems durch einen in einem neuronalen Netzwerk implementierten Algorithmus erfolgt.

6. Verfahren nach einem der Ansprüche 1 bis 5, weiterhin umfassend die Schritte:
- Erfassen von Zustandsvariablen der Vorverarbeitung des Rohstoffs,
- Erfassen von Zustandsvariablen der Verwertung des vorverarbeiteten Rohstoffs.

7. Verfahren nach Anspruch 6, wobei bei der Erstellung des ersten Prozessmodells, des zweiten Prozessmodells und/oder des dritten Prozessmodells die Zustandsvariablen der Vorverarbeitung des Rohstoffs und/oder die Zustandsvariablen der Verwertung des vorverarbeiteten Rohstoffs berücksichtigt werden.

8. Verfahren nach einem der Ansprüche 1 bis 7, wobei die erstellten Prozessmodelle kontinuierlich an das Verhalten des zu regelnden Prozesses innerhalb des Systems angepasst werden.

9. Verfahren nach einem der Ansprüche 1 bis 8, wobei die Prozessmodelle jeweils mehrere in die Zukunft gerichtete angenommene Auswirkungen der Anpassung der Vorverarbeitung des Rohstoffs und/oder Auswirkungen der Anpassung der Verwertung des vorverarbeiteten Rohstoffs auf die Ausgangsvariablen der Verwertung des vorverarbeiteten Rohstoffs berücksichtigen.

10. Vorrichtung zur Ausführung eines Verfahrens zur Regelung eines Prozesses innerhalb eines Systems, insbesondere eines Verbrennungsprozesses innerhalb eines Kraftwerks 1, einer Müllverbrennungsanlage oder einem Zementwerk, gemäß einem der Ansprüche 1 bis 9, wobei die Vorrichtung wenigstens eine Recheneinrichtung (31) und Mittel zum Erfassen von Variablen des Systems und Schnittstellen zur Übermittlung von Stellaktionen an das System umfasst.

## Claims

1. A method for controlling a process in a system, particularly a combustion process in a power plant (1), a waste incineration plant or a cement plant, the process to be controlled comprising pre-processing of a raw material, processing the pre-processed raw material and acquisition of the result of the processing of the pre-processed raw material, the method comprising the following steps:
capturing input variables of the pre-processing (2) of raw material over a first predetermined period;
capturing output variables of the pre-processing (4) of raw material over a second predetermined period, which correspond to the input variables of the processing of the pre-processed raw material; and
capturing output variables of the processing (6) of the pre-processed raw material over a third predetermined period, which correspond to the result of the processing of the pre-processed raw material, wherein the process in the system is controlled by:
adapting the pre-processing (10) of the raw material by carrying out actuating actions regarding the pre-processing of the raw material; and/or
adapting the processing (12) of the pre-processed raw material by carrying out actuating actions regarding the processing of the pre-processed raw material,
wherein the method further comprises the following steps:
creating a first process model, which describes the effects of adapting the pre-processing (10) of raw material on the output variables of the processing of the pre-processed raw material;
creating a second process model, which describes the effects of adapting the processing (12) of the pre-processed raw material on the output variables of the processing of the pre-processed raw material; and
creating of a third process model, which describes the effects of adapting the pre-processing (10) of raw material and adapting the processing of pre-processed (12) raw material on the output variables of the processing of pre-processed raw material,
wherein the first process model, the second process model and the third process model are each created for at least two different time scales;
wherein the process in the system is controlled by adapting the pre-processing (10) of the raw material and/or adapting the processing of the pre-processed (12) raw material taking into account control objectives for the result of the processing of the pre-processed raw material according to the predictions of at least one of the created process models.

2. The method according to claim 1, wherein during selection of one of the process models created for controlling the process in the system first a relevant time scale is determined.

3. The method according to claim 2, wherein the relevant time scale is determined on basis of the input and output variables captured over the first predetermined period, the second predetermined period and the third predetermined period.

4. The method according to claim 2 or 3, wherein the process models created for a specific time scale are compared with each other for selecting the process model for controlling the process in the system.

5. The method according to any one of claims 1 to 4, wherein the process model for controlling the process in the system is selected by an algorithm implemented in a neural network.

6. The method according to any one of claims 1 to 5, further comprising the steps of:
capturing of state variables of the pre-processing of the raw material; and
capturing of state variables of the processing of the pre-processed raw material.

7. The method according to claim 6, wherein the creation of the first process model, the second process model and/or the third process model takes into account the state variables of the pre-processing of the raw material and/or the state variables of the processing of the pre-processed raw material.

8. The method according to any one of claims 1 to 7, wherein the created process models are continuously adapted to the behaviour of the process in the system to be controlled.

9. The method according to any one of claims 1 to 8, wherein the process models each take into account several assumed future effects of adapting the pre-processing of the raw material and/or effects of adapting the processing of the pre-processed raw material on the output variables of the processing of the pre-processed raw material.

10. An apparatus for executing a method for controlling a process in a system, in particular a combustion process in a power plant (1), a waste incineration plant or a cement plant, according to any one of claims 1 to 9, wherein the apparatus comprises at least one computing device (31) and means for detecting variables of the system and interfaces for transmitting actuating actions to the system.

## Revendications

1. Procédé de contrôle d'un processus dans un système, en particulier un processus de combustion dans une centrale électrique (1), une usine d'incinération de déchets ou une usine de ciment, le processus à contrôler comprenant le prétraitement d'une matière première, le traitement de la matière première prétraitée et l'acquisition du résultat du traitement de la matière première prétraitée, le procédé comprenant les étapes suivantes :
la capture de variables d'entrée du prétraitement (2) de matière première sur une première période prédéterminée ;
la capture de variables de sortie du prétraitement (4) de matière première sur une deuxième période prédéterminée, qui correspond aux variables d'entrée du traitement de la matière première prétraitée ; et
la capture de variables de sortie du traitement (6) de la matière première prétraitée sur une troisième période prédéterminée, qui correspond au résultat du traitement de la matière première prétraitée, le processus dans le système étant contrôlé par :
l'adaptation du prétraitement (10) de la matière première par exécution d'actions d'actionnement concernant le prétraitement de la matière première ; et/ou
l'adaptation du traitement (12) de la matière première prétraitée par exécution d'actions d'actionnement concernant le traitement de la matière première prétraitée,
le procédé comprenant en outre les étapes suivantes :
la création d'un premier modèle de processus, qui décrit les effets d'adaptation du prétraitement (10) de matière première sur les variables de sortie du traitement de la matière première prétraitée ;
la création d'un deuxième modèle de processus, qui décrit les effets d'adaptation du traitement (12) de la matière première prétraitée sur les variables de sortie du traitement de la matière première prétraitée ; et
la création d'un troisième modèle de processus, qui décrit les effets d'adaptation du prétraitement (10) de matière première et d'adaptation du traitement (12) de matière première prétraitée sur les variables de sortie du traitement de matière première prétraitée,
le premier modèle de processus, le deuxième modèle de processus et le troisième modèle de processus étant chacun créés pour au moins deux échelles temporelles différentes ;
le processus dans le système étant contrôlé en adaptant le prétraitement (10) de la matière première et/ou en adaptant le traitement (12) de la matière première prétraitée en prenant en compte les objectifs de contrôle pour le résultat du traitement de la matière première prétraitée en fonction des prédictions d'au moins un des modèles de processus créés.

2. Procédé selon la revendication 1, pendant la sélection d'un des modèles de processus créés pour contrôler le processus dans le système, une échelle temporelle pertinente étant tout d'abord déterminée.

3. Procédé selon la revendication 2, l'échelle temporelle pertinente étant déterminée sur la base des variables d'entrée et de sortie capturées sur la première période prédéterminée, la deuxième période prédéterminée et la troisième période prédéterminée.

4. Procédé selon la revendication 2 ou 3, les modèles de processus créés pour une échelle temporelle spécifique étant comparés les uns aux autres pour sélectionner le modèle de processus permettant de contrôler le processus dans le système.

5. Procédé selon l'une quelconque des revendications 1 à 4, le modèle de processus permettant de contrôler le processus dans le système étant sélectionné par un algorithme implémenté dans un réseau neuronal.

6. Procédé selon l'une quelconque des revendications 1 à 5, comprenant en outre les étapes suivantes :
la capture des variables d'état du prétraitement de la matière première ; et
la capture des variables d'état du traitement de la matière première prétraitée.

7. Procédé selon la revendication 6, la création du premier modèle de processus, du deuxième modèle de processus et/ou du troisième modèle de processus prenant en compte les variables d'état du prétraitement de la matière première et/ou les variables d'état du traitement de la matière première prétraitée.

8. Procédé selon l'une quelconque des revendications 1 à 7, les modèles de processus créés étant adaptés en continu au comportement du processus dans le système à contrôler.

9. Procédé selon l'une quelconque des revendications 1 à 8, les modèles de processus prenant chacun en compte plusieurs futurs effets d'adaptation supposés du prétraitement de la matière première et/ou effets d'adaptation de traitement de la matière première prétraitée sur les variables de sortie du traitement de la matière première prétraitée.

10. Appareil permettant d'exécuter un procédé de contrôle d'un processus dans un système, en particulier un processus de combustion dans une centrale électrique (1), une usine d'incinération de déchets ou une usine de ciment, selon l'une quelconque des revendications 1 à 9, l'appareil comprenant au moins un dispositif informatique (31) et un moyen permettant de détecter des variables du système et des interfaces pour transmettre des actions d'actionnement au système.
